(19) Europäisches Patentamt
European Patent Office
Office européen des brevets

(11) EP 1 895 563 A2

(12) EUROPEAN PATENT APPLICATION

(43) Date of publication:
05.03.2008 Bulletin 2008/10

(51) Int Cl.:
H01J 17/16 (2006.01)　　　H01J 17/49 (2006.01)

(21) Application number: 07253201.3

(22) Date of filing: 15.08.2007

(84) Designated Contracting States:
AT BE BG CH CY CZ DE DK EE ES FI FR GB GR
HU IE IS IT LI LT LU LV MC MT NL PL PT RO SE
SI SK TR
Designated Extension States:
AL BA HR MK YU

(30) Priority: 31.08.2006 JP 2006235357

(71) Applicant: Fujitsu Hitachi Plasma Display Limited
Kunitomi-cho,
880-1194 Miyazaki
Higashimorokata-gun (JP)

(72) Inventor: Hori, Nobuyuki
c/o Hitachi, Ltd, Intellectural Porperty
Tokyo 100-8220 (JP)

(74) Representative: Calderbank, Thomas Roger
MEWBURN ELLIS
York House
23 Kingsway
London WC2B 6HP (GB)

(54) **Display panel module and manufactruring method therefor**

(57) A display panel module (1) includes a display panel (2) and a function film (3) adhered onto the front surface of the display panel. The function film includes at least one transparent substrate (3A) and an adhesive layer (3B) which adheres the display panel and the function film together. A thickness of the at least one transparent substrate and a thickness of the adhesive layer have a predetermined relation so as to substantially prevent occurrence of a concave portion with a depth greater than 3um on the front surface of the function film, wherein a scratch resistance of the function film is improved.

FIG. 3

EP 1 895 563 A2

**Description**

The present invention relates to display panel modules and manufacturing methods therefor, and in particular to a display panel module in which a function film is directly adhered onto a front surface of a display panel, and a manufacturing method therefor.

Display panels are referred to as "flat panel displays" inclusive of, for example, plasma display panels (PDPs), liquid crystal panels, organic electronics luminescence, and field emission displays.

In a display device using a display panel for image display, a light-transmissive function film is adhered onto the front surface of a display panel to increase the performance of the display device. The function film has at least a function for preventing reflection of outer light original. In the case of PDPs, as other functions realizable with the function film, there are correction of display colors, shielding of electromagnetic waves, and shielding of near infrared light.

Because of improvement in optical performance, such as reduction in the occurrences of deficiencies, such as halation and double display, attention is drawn to a technique for directly adhering a function film onto the PDP. For example, a function film described in Patent Publication 1 (Japanese Unexamined Patent Application Publication No. 2004-206076), a function film includes, a color tuner layer, filter layer, and electromagnetic wave shield layer, and is adhered to the front surface of a PDP. The function film is adhered before assembly of a display device having a display panel stored in a housing. More specifically, in the manufacture of the display device, at first a display panel module including a function film and a drive circuit substrate is manufactured and then the display panel module is assembled to the housing.

In addition, as shown and described in Patent Publication 2 (Japanese Unexamined Patent Application Publication No. 2006-201557), there is disclosed an optical filter formed such that a structure for restraining reflection of outer light along the horizontal direction of the image screen is provided in a function film, thereby to improve a bright-room contrast. A layer including the structure is referred to as a "contrast improvement film" and can be appropriately designed in compliance with uses for the bright-room contrast and vertical viewing angle that are in a tradeoff relationship. As such, the layer is expected to have an improved adaptability to display panel modules, such as PDPs with sufficiently wide viewing angle.

Further, according to Patent Publication 3 (Japanese Unexamined Patent Application Publication No. 2006-201747), in the manufacture of a display panel module, a drive circuit substrate is mounted to a display panel, a lighting test of a panel is carried out using the drive circuit substrate, and a function film is adhered after the display panel has been verified to be a defect-free product. Thereby, it is prevented that the function film already adhered to the display panel becomes useless in the event that a defect has been detected in the display panel. However, since the function film is adhered after mounting of the drive circuit substrate, a lot of dust (foreign matter) is entrained into an adhesion interface, they can often introduces bubble deficiencies about with foreign matter, whereby forming a thick adhesive layer intervening between the front surface of the display panel. The adhesive layer has a thickness of 50 μm or greater and wraps dust smaller than the thickness, thereby reducing voids enclosing dust. A void sufficiently small in size is not recognized as deficiency, such that even when the finished display panel module is used under a low atmospheric pressure environment, void expansion less occurs, consequently suppressing increase in deficiency attributed to variation in the utilization environment.

According to the related technique, while the function film thickness is reduced to reduce the costs, the adhesive layer is somewhat softened to impart a covering property of foreign matter (foreign matter resistance), and the thickness of the adhesive layer is increased to improve the foreign matter resistance.

However, since the soft or elastomeric adhesive layer is provided below the thin function film, even with application of a pressure as low as at a nail scratching level, the function film is likely to have a concave plastic deformation. Concave portions formed the plastic deformation look like scratches when a fluorescent tube or the like is reflected, thereby reducing appearance quality as a problem.

While reducing manufacturing costs for a display panel module, the present invention provides the display panel module with high appearance quality, and a manufacturing method therefor.

In order to solve the problems described above, a display panel module of the present invention comprises a display panel and a function film adhered onto the front surface of the display panel. The function film includes at least one transparent substrate and an adhesive layer which adheres the display panel and the function film together, and a thickness of the at least one transparent substrate and a thickness of the adhesive layer have a predetermined relation so as to substantially prevent occurrence of a concave portion with a depth greater than 3um on the front surface of the function film.

According to the present invention, while manufacturing costs for a display panel module is reduced, the display panel module with high appearance quality can be provided.

**In the drawings**

FIG. 1 is a view showing an exterior of a display device in accordance with an embodiment of the present invention.

FIG. 2 is a view showing a general configuration of a display panel module.
FIG. 3 is a cross sectional view along the line a-a of FIG. 1.
FIG. 4 is a view showing an example of a layered structure of a front surface sheet.
FIG. 5 is a view showing another example of a layered structure of a front surface sheet.
FIG. 6 shows conceptual views of adhesion states of a function film of the present invention.
FIG. 7 is a view showing a manufacturing procedure for a display panel module.
FIG. 8 is a view showing an adhesion procedure for the function film.
FIG. 9 is a view showing a determination condition for a concave scratch.
FIG. 10 is a view showing occurrence/nonoccurrence of concave scratches corresponding to adhesive layer thicknesses and base film thicknesses.
FIG. 11 is a view showing the state of a function film and adhesive layer deformed with loads.
FIG. 12 is a view showing the occurrence and nonoccurrence of concave scratches corresponding to adhesive layer thicknesses and base film thicknesses.
FIG. 13 is a cross sectional view of a modified example of the display panel module in accordance with the embodiment.

Embodiments of the present invention will be described with reference to the drawings. However, the technical scope of the present invention is not limited to the embodiments, but rather is encompassed to the items described in the appended claims and equivalents thereof.

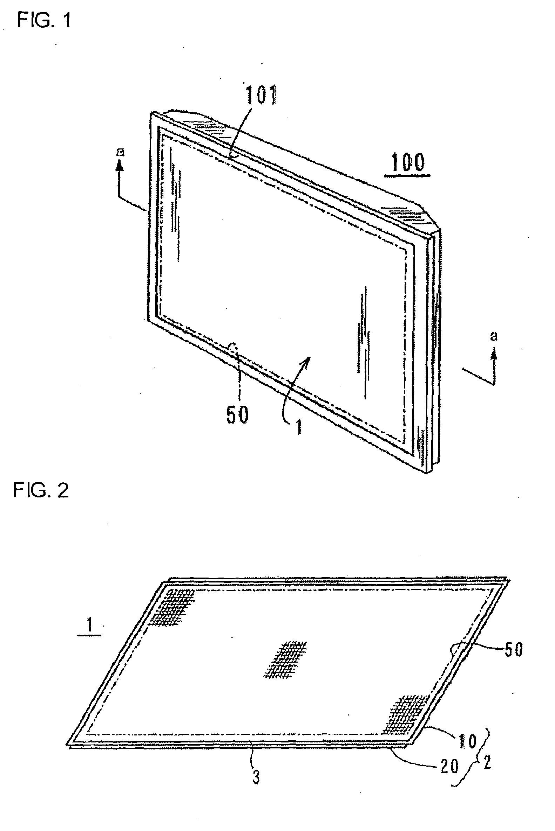

FIG. 1 shows a plasma display device in accordance with an embodiment of the present invention. The plasma display device 100, is a flat type, has a screen 50 having the size of 42 inches on the diagonal. The screen 50 has the dimensions of 0.92 m in the horizontal direction and 0.52 m in the vertical direction. A facial cover 101, which determines a plane size of the plasma display device 100, includes an opening greater than the screen 50 from which the front surface, except the peripheral portion, of the plasma display device 100 is exposed.

FIG. 2 shows a general view of a display panel module 1. The display panel module 1 includes a plasma display panel 2, a front surface sheet 3 (a function film), directly adhered onto the front surface of the plasma display panel 2, and a drive circuit board (not shown). The front surface sheet 3 is formed from a plurality of layers including an optical film having an optical filter function, and an EMI shield film having an electromagnetic wave shield function. The plasma display panel 2 is a self-emitting device with gas discharge, and includes a front surface plate 10 and a back surface plate 20. The front surface plate 10 and the back surface plate 20 are each formed from a glass plate having a thickness of about 3 mm and cell components formed on the surface of the glass plate.

The plasma display panel 2 contains a penning gas composed by mixing neon and xenon (2% or more). The penning gas emits, at discharge time, rays of near infrared light that respectively have wavelengths of 830 nm and 880 nm.

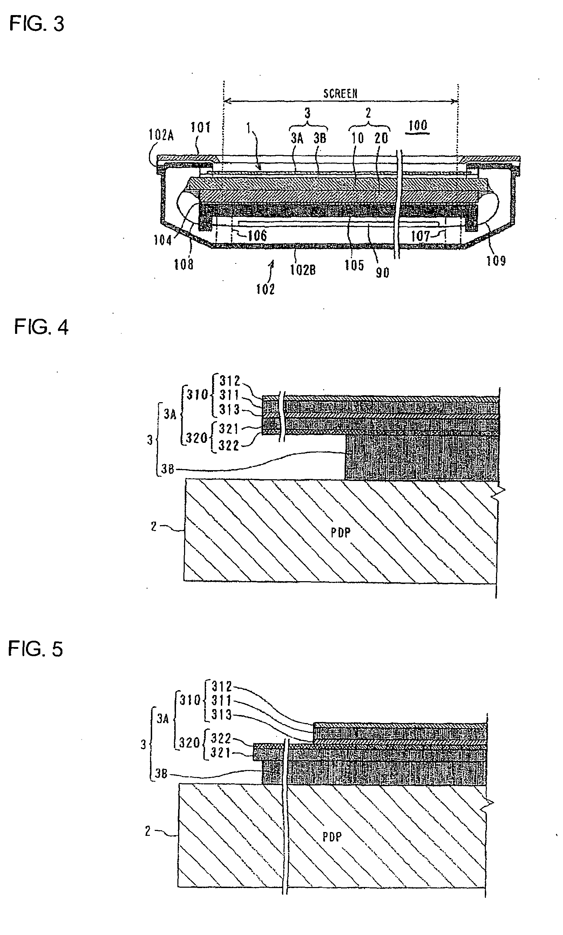

FIG. 3 is a cross sectional view along the line A-A of FIG. 1, showing an interior configuration of the display device. In the display device 100, the display panel module 1 having a circuit substrate board 90 is disposed in an electroconductive housing 102 (shield housing) having the adhered facial cover 101. The electroconductive housing 102 includes a frame 102A having an opening somewhat greater than the screen, and a plate 102B formed as a thin box. The the frame 102A exists in a front side portion of the electroconductive housing 102, and the plate 102B exists in a back side portion of the electroconductive housing 102.

An aluminium chassis 105 is adhered to the back surface of the plasma display panel 2 by using a double sided adhesive tape 104, and more specifically, is fixedly adhered to the plate 102B through the spacers 106 and 107. The circuit substrate board 90 is disposed on a back surface side of the chassis 105. Flexible cables 108 and 109 are used for electrical connection between the circuit substrate board 90 and the plasma display panel 2. Thus, in the present embodiment, the display panel module 1 is configured to include the front surface sheet 3, the plasma display panel 2, the double sided adhesive tape 104, the chassis 105, the circuit substrate board 90, and the flexible cables 108 and 109. An electroconductive tape for electromagnetic wave shielding and for communication between the front surface sheet 3 and frame 102A is adhered onto the front surface of the plasma display panel 2 in such a manner as to overlap with an end portion of the front surface sheet 3. FIG. 3 omits showing other components, such as a power supply, image signal processing circuit, and acoustic circuit, disposed together with the display panel module 1 in the electroconductive housing 102.

The front surface sheet 3 is a multilayered structure or laminate ("laminate," hereinbelow) in which a function film 3A having a multilayer structure and an adhesive layer 3B made of resin are laminated onto one another. The plane size of the front surface sheet 3, more specifically, the plane size of the function film 3A is greater than the plane size of the image screen, but is smaller than the plane size of the plasma display panel 2. The plane size of the adhesive layer 3B is greater than the plane size of the image screen, but is smaller than the plane size of the function film 3A.

In the display device 100, the front surface sheet 3 extends planarly along the plasma display panel 2, and only the end portion thereof overlaps the frame 102A of the electroconductive housing 102. The frame 102A is located on the front side of the front surface sheet 3, and the end portion of the front surface sheet 3 is sandwiched by the electroconductive housing 102 and plasma display panel 2.

FIG. 4 shows a layered structure of the front surface sheet 3. The front surface sheet 3 is a laminate in which an optical film 310, an EMI shield film layer 320 for electromagnetic wave shielding, and the adhesive layer 3B are laminated or overlaid in that order from the front side. The optical film 310 and the EMI shield film layer 320 together constitute the function film 3A. The adhesive layer 3B is more flexible than the function film 3A, and has an impact absorption function. The visible light transmittance of the overall front surface sheet 3 is about 40%, which is a value obtained after luminosity correction.

The optical film 310 is formed from a PET (polyethylene terephthalate) base film 311 (a transparent substrate), an antireflective film 312 coated on the front surface side of the base film 311, and a dye layer 313.

The antireflective film 312 prevents the reflection of outer light. However, the function of the antireflective film 312 can be altered from the AR (antireflection) function to an AG (anti-glare) function. The antireflective film 312 includes a hard coat that improves scratch resistance.

The dye layer 313 shields near infrared light and tunes the visible light transmittances of red (R), green (G), and blue (B) rays. In the resin, the dye layer 313 includes an infrared light absorption dye for absorbing light having a wavelength in the range of about 800 nm to about 1000 nm; a neon light absorption dye for absorbing a light having a wavelength of about 580 nm; and a dye for tuning the visible light transmittance. The optical film 310 has an outer light reflectance of 3%, which is a value after luminosity correction. A visible light transmittance is 55% in terms of a post-luminosity correction value. Further, a transmittance of near infrared light is 10% on the average across the inside of an absorption wavelength area.

The electromagnetic wave shielding EMI shield film layer 320 includes a PET base film 321 (a transparent substrate) and a 10 nm thick electroconductive layer 322 formed of a copper foil including a mesh-like portion. In the electroconductive layer 322, a region overlapping the screen has a visible light transmittance of 80%. A blackening process is applied on the front side surface of the electroconductive layer 322, such that when the EMI shield film layer 320 is viewed through the optical film 310, it looks substantially as simple black.

The base film 311 of the optical film 310 and the base film 321 of the EMI shield film layer 320 have the function of preventing scattering of glass in a state of emergency in which the glass plate of the plasma display panel 2 is broken. In order to obtain this function, preferably the base films 311 and 321 together have a total thickness of 50 $\mu$m or greater. In the present example, the respective PET film has a thickness of 100 $\mu$m or greater.

Although while FIG. 4 exemplifies the configuration in which the electroconductive layer 322 of the EMI shield film layer 320 is disposed on the adhesive surface side for adhesion to the plasma display panel 2, another configuration is exemplified in FIG. 5. In an example of FIG. 5, the electroconductive layer 322 is disposed above the base film 321, and the base film 321 and the plasma display panel 2 are adhered together. In the case that the configuration of FIG. 5 is employed, the optical film 310 is formed smaller than the EMI shield film layer 320 to cause a peripheral portion of the electroconductive layer 322 to be exposed. Thereby, the structure of electroconductive contact with the frame 102A of the electroconductive layer 322 can be more simplified than in the case of FIG. 4.

An adhesive layer 3B is formed of acrylic elastmeric resin and has a visible light transmittance of 90%. An adhesive layer 3B is formed by resin coating. In the coating event, the resin enters into clearances of the mesh in the electroconductive layer 322, whereby the electroconductive layer 322 is planarized. This prevents light from being scattered due to surface irregularity of the electroconductive layer 322.

Further, the adhesive layer 3B of the present embodiment has appropriate peelability. The adhesive layer 3B exhibits adhesion with relatively high strength to the EMI shield film layer 320, which is composed of PET and copper. In comparison, the adhesive layer 3B exhibits adhesion with relatively low adhesion to a glass surface used for the front surface of the plasma display panel 2. The adhesion strength of the adhesive layer 3B is about 6N/25 mm measured by a 90-degree peeling test at a feed speed of 200 mm/min. Preferably, however, the adhesion strength thereof is 15 N/25 mm or lower for carrying out rework. In order to implement steady adhesion even when a deformation somewhat remains in the film, preferably the adhesion strength can be 5 N/25 mm or higher. When attempting to peel the front surface sheet 3, the function film 3A and adhesive layer 3B do not peel from one another, but the front surface sheet 3 normally peels from the plasma display panel 2. In this case, "normally" means that a uniform after-peel surface without a visible unpeeled portion remained can be obtained.

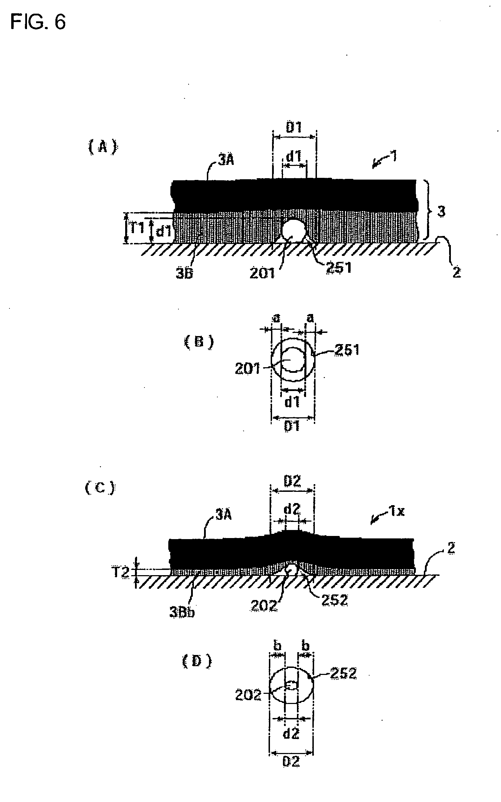

Further, the adhesive layer 3B has foreign-matter covering property peculiar to the embodiment of the present invention. The sufficient thickness of the adhesive layer 3B contributes to productivity improvement for the display panel module 1. As will be described herebelow with reference to FIG. 6, with the adhesive layer 3B having the appropriate thickness, cleanliness constraints on adhesion locations is moderated.

FIG. 6 shows conceptual views of adhesion states of a function film of the embodiment. FIG. 6(A) is a cross sectional view of a major portion of the display panel module 1 of the embodiment, and shows a function of the adhesive layer 3B. FIG. 6(B) is a plan view of a void 251 shown in FIG. 6(A). FIG. 6(C) is a cross sectional view of a major portion of a display panel module 1x shown as a comparative example. FIG. 6(D) is a plan view of a void 252 shown in FIG. 6 (C). In FIGS. 6(C) and 6(D), the same characters are used to designate components corresponding to those in FIG. 6(A).

In the manufacture of the display panel module 1, in the event of adhesion of the front surface sheet 3 onto the plasma display panel 2, dust ("foreign matter," hereinafter) in the particle size (or, simply "size," hereinafter) of 10 $\mu$m or greater can be entrained into an adhesion interface. If the thickness of the adhesive layer 3B is 50 $\mu$m or greater (preferably, in the range of 100 $\mu$m to 50 $\mu$m (= 0.1 mm to 0.5 mm)), even when foreign matter in the size of several dozen microns ($\mu$m) has entered, the foreign matter is buried into the elastomeric adhesive layer 3B. More particularly, as shown in FIG. 6(A), the adhesive layer 3B is deformed in such a manner as to wrap foreign matter 201. However, since the adhesive layer 3B does not have liquidity, the foreign matter 201 is not completely wrapped, the void 251 occurs around the periphery of the void 251. The void 251 is an air bubble with the foreign matter 201 as a core in the center, and forms a region where the adhesive layer 3B and the plasma display panel 2 are not in contact with one another. The material quality of the adhesive layer 3B relates to the size of the void 251. The material quality of the adhesive layer 3B is required to have good wettability for the front surface, i.e., glass surface, of the plasma display panel 2. With good wettability, even in the use of the display panel module 1 in an environment with an air pressure lower than that in the manufacture, expansion of the void 251 due to depressurization is less occurrable.

In the example of FIGS. 6(A) and 6(B), the foreign matter 201 is substantially spherical, and the size d1 thereof is smaller than a thickness T1 of the void 251. As shown in FIG. 6(B), the void 251 has, in the plan view, an annular shape enclosing the foreign matter 201, and the size D1 thereof is, of course, greater than the size d1 of the foreign matter 201.

What should be noticed in this case is that even when the size D1 of the void 251 is a relatively large value of, for example, 150 $\mu$m, the void 251 is not always hindrance to displaying. A phenomenon in which the void is seen brightened is attributed to a difference in refraction index between the void and the glass plate and is caused when the void forms a tent-shaped lens. As such, even an air-bubble defect less detectable in inspection using reflected light in a non-lit or off-state of the display panel can become easily detectable by being observed while altering the view angle in a lit or on-state of the display panel. For the above-described reasons, such an air-bubble defect is more conspicuous than a deficiency due to foreign matter or the like without bubble.

For example, in comparison to FIGS. 6(A) and 6(B), in FIGS. 6(C) and 6(D), while the size of the air bubble is substantially the same (D1=D2), the size of the foreign matter or core is smaller (a<b). For this reason, in the event that foreign matter is opaque, the air bubble in the latter case is more easily recognized. However, foreign matter or cores of air bubbles include many transparent ones, it is sufficient to take D1 itself into account, not the difference (D1 - d1) between the sizes of the foreign matter and the void. As such, a condition to be satisfied by the display panel module 1 is "the size of the void enclosing foreign matter is smaller than 150 $\mu$m."

The above-described condition has to be satisfied in an operational environment specified in specifications of the display device 100. The void tends to be larger as the air pressure in the operational environment is lower. Generally, according to the specifications, it is contemplated that the display device 100 is used in an environment where the air pressure is 700 hPa (hecto pascal) (highland at 3000 m above sea level, for example). As such, the condition has to be satisfied in a low air-pressure environment having the pressure of 700 hPa. The embodiment is characterized in that the display panel module is exposed to the pressure lower than the atmospheric air pressure in the event of adhesion of the function film onto the panel, the module has to be stored for at least one day at a temperature higher than or equal to the ambient temperature. Thereby, the adhesive layer is rendered to smoothly fit with the glass surface, and the void around the foreign matter is narrowed. In addition, also when exposed to a depressurized environment, the void becomes less enlargeable.

As described above, whether the void 251, 252 becomes conspicuous is dependant on the void size. However, preferably, the void 251, 252 is even smaller in order to eliminated visible display deficiencies. As the cell size is reduced in association with enhanced screen resolution, the allowable void size is reduced. Taking this into account, conditions described herebelow are practical regarding foreign matter coverage (foreign matter resistance) of the adhesive layer 3B.

The foreign matter coverage of the adhesive layer 3B herein refers to the following property. A particle (glass bead) having the size of 50 $\mu$m is placed on a glass plate equivalent in quality to the glass plate of the plasma display panel 2. In this state, the function film 3A is adhered thereto under conditions in which the pressure is about 0.05 MPa and the speed is about 6 m/min, the size of a void (noncontact region between the adhesive layer 3B and the glass plate) is deformed to be 15 $\mu$m or less.

In practice, a glass bead of a 50 $\mu$m diameter or a black acrylic resin bead is intentionally mixed into the adhesion interface to thereby measure the void size, thereby making it possible to verify the appropriateness of the foreign matter coverage. The present inventors verified that, when a material of the adhesive layer is selected so that the diameter D of the void developed by the glass bead of the diameter (d = 50 $\mu$m) is 150 $\mu$m or less, that is, the ratio therebetween is 3 or less (D ≤3d), no optical influences on the display quality are recognized against dust entrained in a clean atmosphere environment.

While the diameter ratio of the void to the foreign matter is preferably as small as possible for making it possible to handle even larger foreign matter (which increases the production), alteration of the adhering condition (pressure, speed, etc.), the size, or the material of the entraining bead varies the diameter ratio of the void to foreign matter. For example, in a general manner of adhesion using a hand roller, since a pressure of about 0.2 MPa is applied, the diameter ratio is less than 2. The adhesion speed within a range of about 1 to about 10 m/min does not substantially affect the foreign matter resistance. In addition, in the present embodiment, the adhesive layer is formed primarily from the acrylic resin, such that the adhesive layer is fittable with an acrylic bead than with the glass bead, and the diameter ratio is reduced.

Deposition of foreign matter can be prevented by adhering the front surface sheet 3 onto the plasma display panel 2 in a clean room. However, the front surface sheet 3 is adhered prior to aging and lighting test of the plasma display panel 2. As a result of the lighting test, if the plasma display panel 2 is found defective, not only the plasma display panel 2, but also the front surface sheet 3 has to be rejected as a waste. Even if the front surface sheet 3 would be able to be peeled and reproduced, the processing step of peeling would have to be added.

As described above, in the display panel module 1 of the present embodiment, deposition of foreign matter in the size of about 50 μm is tolerated. Accordingly, the front surface sheet 3 can be adhered outside a clean room. As such, the manufacturing process can be performed in the manner that a plasma display panel 2 manufactured in a clean room is transferred to the outside of the clean room; a heat-dissipating chassis 105 and a circuit substrate board 90 are assembled, and a lighting test is performed; and a front surface sheet 3 is adhered onto the plasma display panel 2, if accepted in the test. Thereby, losses in resource and time associated with, for example, wasting and peeling of the front surface sheet 3 can be eliminated. Further, even when an end user has made a scratch on a filter, repair work can be manually performed in a simple clean booth. A condition therefor is to maintain the value of 15 N/25 mm or lower even when the adhesion strength varies over time or time dependently. In the case of an adhesion strength greater than or equal to that value, it takes too much time for manual operation for peeling the filter. However, in the case of an adhesion strength exceeding 15 N/25 mm, repair can be accomplished in the manner that the filter is peeled off by using a machine, and a new filter is attached for replacement.

While an upper limit of the size of foreign matter is dependant on the cell size, in practice the limit is about 150 μm. Deposition of foreign matter smaller than or equal to the upper limit does not cause a significant reduction in the luminance of a corresponding cell. Relatively large foreign matter greater than or equal to 50 μm can be removed by using an adherent roller or a brush. The size of the foreign matter refers to the size in the horizontal direction. The optical visibility can be discussed with respect to only foreign matter sizes and void sizes in the horizontal direction. In the above, however, description has been made with reference to the cases where the sizes in the horizontal and vertical directions are identical to one another. This is because the height of the foreign matter significantly influences the foreign matter adhesion properties. In many cases, practical foreign matter has the height smaller than the size. Such foreign matter is easy to handle in adhesion. The size of fibrous foreign matter is assumed to be the thickness. This is because the void is formed in a row in the length direction of fibers.

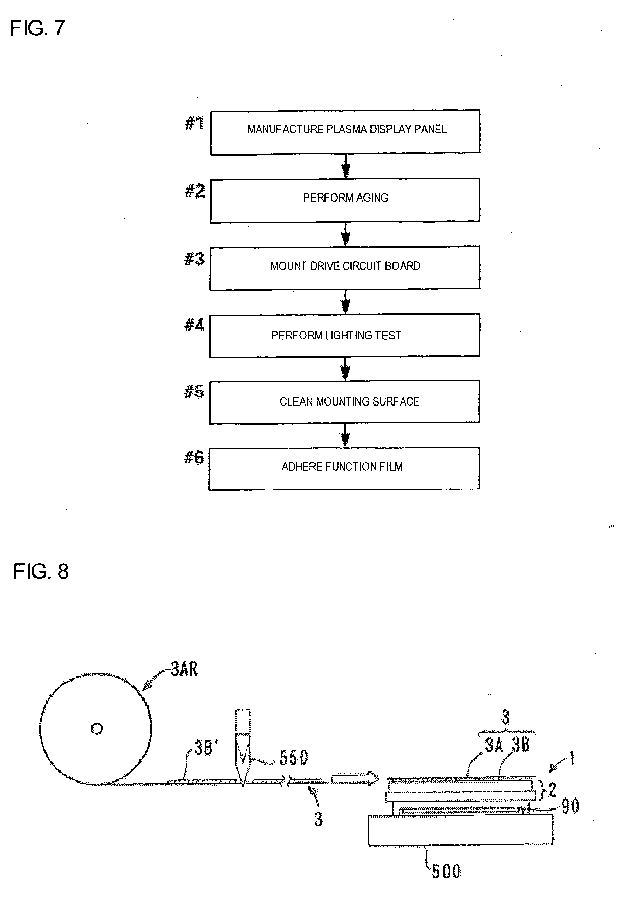

FIG. 7 shows a manufacturing procedure for a display panel module.

A plasma display panel 2 is manufactured (at #1), and then aging is performed (at #2). Then, the circuit substrate board 90 is assembled onto the back surface of the plasma display panel 2 (at #3) for which aging has been completed. Then, a lighting test is carried out for operation of the circuit substrate board 90 and plasma display panel 2, thereby to verify the plasma display panel 2 and the circuit substrate board 90 to be acceptable products (at #4). Thereafter, the front surface of the plasma display panel 2 is cleaned (at #5). Then, a front surface sheet 3 including the function film 3A and the adhesive layer 3B is adhered onto the front surface of the plasma display panel 2 (at #6). In cleaning of the front surface of the plasma display panel 2, relatively large dust in the size of 100 μm or larger is removed by using an adherent roller or a brush.

Preferably, adhesion of the function film 3A is carried out in a depressurized environment having the pressure of 700 hPa or lower. Thereby, in the event of using the finished display panel module 1 in the standard air pressure environment, the adhesion interface is brought into the state of negative pressure, such that foaming is prevented from occurring on the adhesion interface. In addition, foaming cannot easily occur on the adhesion interface in the event of using the display panel module 1 in a low pressure environment of about 700 hPa. However, in the event that the condition regarding the void is satisfied, the function film 3A can be carried out in the standard air pressure environment.

In the manufacture procedure described above, reliability of the display panel module 1 can be verified by performing examinations described below in units of a predetermined lot or a material alteration. In the present case, adhesion and measurement are carried out in the atmospheric environment with an ambient temperature (25±10°C) and a normal pressure (1000±100 hMa). Foreign matter (spherical glass bead having the diameter of 50 μm) having an already known size is intentionally included into the interface, whereby optical influences are observed. However, no problems take place in practice when items (1) to (3) of tests described below are satisfied.

(1) Foreign Matter Resistance: Immediately after (within 10 minutes) the function film 3A is adhered onto the glass plate, which is used as a dummy, the size d1 (50 $\mu$m) of the foreign matter and a size D1s of the void are measured. If the size D1s is three times smaller than or equal to three times of d1 (3×d1), the adhesive layer has a desired coverage for dust of about 50 $\mu$m predicted to include in the adhesion interface in the atmospheric environment. Such dust does not influence the display quality.

(2) Exposure Relaxation: In the state where the function film 3A is adhered, the assembly is exposed for 72 hours, and then the size D1 of the void is measured. Preferably, the size D1 is smaller than or equal to one time of the size D1s (D1 ≤ D1s) immediately after adhesion.

(3) Depressurization Relaxation: In the state where the function film 3A is adhered, the assembly is exposed for 30 hours in a low pressure environment of 700 hPa, and then the size D1 of the void in the normal pressure environment is measured. Preferably, the size D1 is smaller than or equal to one time of the size D1s (D1 ≤ D1s) immediately after adhesion.

(4) Intensified Depressurization Relaxation: In the state where the function film 3A is adhered, the assembly is exposed in a low pressure environment of 300hPa for 30 minutes, and then the size D1 of the void in the normal pressure environment is measured. Preferably, the size D1 is smaller than or equal to one time of the size D1s (D1 ≤ D1s) immediately after adhesion.

(5) Heating Relaxation: In the state where the function film 3A is adhered, the assembly is exposed in a heated normal pressure environment of 60° for 24 hours, and then the size D1 of the void in the normal pressure environment is measured. Preferably, the size D1 is smaller than or equal to one time of the size D1s (D1 ≤ D1s) immediately after adhesion.

(6) Pressurization Relaxation: In the state where the function film 3A is adhered, the assembly is exposed in a 3-atm high pressure environment for 1 hour, and then the size D1 of the void in the normal pressure environment is measured. Preferably, the size D1 is smaller than or equal to one time of the size D1 s (D1 ≤ D1 s) immediately after adhesion.

FIG. 8 shows an adhesion procedure for the function film.

A multilayer film 3AR is drawn from a roll having the wound multilayer film 3AR produced in a "roll to roll" manner, and a resin 3B', which is to form the adhesive layer, is coated onto the multilayer film 3AR. The multilayer film 3AR is cut by a cutter 550, and the front surface sheet 3 thus obtained is adhered onto the tested plasma display panel 2 place on a stage 500. In this event, the circuit substrate board 90 is already mounted to the plasma display panel 2. Thereby, the plasma display panel 2 and the front surface sheet 3 are integrated to one unit, whereby the display panel module 1 is completed. Preferably, in the step of adhesion, a material having a buffering property, such as foam urethan, is used for a press roller for adhesion in order to address warpage of the surface of the plasma display panel 2. As an alternative manufacturing method, a method is available in which, after coating of the resin 3B', the multilayer film 3AR is adhered by being inverted for the obverse and reverse sides or is turned upside down, and then is cut out.

(Scratch Resistance of Function Film)

In the case that the adhesive layer 3B is formed with a thickness of at least 50 $\mu$m or more, the function film 3A is concavely deformed by pressure in the vertical direction, and the deformed portion develops to be an elastically deformed scratch, thereby to degrade the appearance quality. As such, the thickness of any one of transparent resin substrates constituting the function film 3A needs to be somewhat increased to not cause concave deformation (that is, to impart the scratch resistance). However, it is not preferable to unreasonably increase the thickness of the transparent resin substrate since such increase introduces an increase in the manufacturing costs and a reduction in the transparency. It is, therefore, necessary to verify the thicknesses of the transparent resin substrates of the function film 3A that are necessary to provide sufficient foreign matter resistance.

Firstly, in order to secure the scratch resistance, it is necessary that, of the plurality of transparent resin substrates (PET substrates) 311 and 321, which constitute the function film 3A, a PET substrate having a largest thickness has a predetermined thickness or more. The scratch resistance cannot be secured simply for the reason that the total thickness of the plurality of PET substrates 311 and 321 is large.

Of the PET substrates (films) 311 and 321, which constitute the function film 3A, the substrate 321 (electromagnetic wave shield film 321) is selected corresponding to, for example, the electromagnetic wave shielding amount and costs required in units of the type of the display panel, such as the type of metal mesh, fiber mesh, metal fine particulate sputter. As such, when restrictions are provided on the base film thickness, the electromagnetic wave shield film 321 is not preferable as it introduces an increase in design cost. In contrast, the PET film 311 (anti-reflection film) is common regardless of the display panel type, such that the base film 311 is suitable to design optimal thicknesses in conjunction with the adhesive layer. That is, even when a thickness corresponding to the adhesive layer is selected, there occur no causes for having influence derived from the thickness. The following describes measurement examples of scratch resistances of function film surfaces of display panel modules each formed in the manner that a function film containing a base film 311 having an altered thickness is adhered via an adhesive layer 3B having an altered thickness.

In testing, a pencil hardness tester was used for evaluation of the scratch resistance, such that the testing used sample assemblies each formed in such a manner that the function film is adhered to a small piece of a glass plate equivalent in quality to the glass plate of the plasma display panel 2. Such alternative samples do not influence the evaluation results.

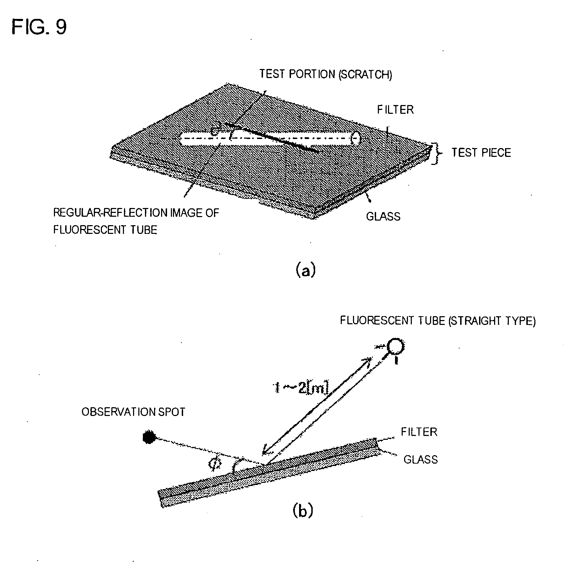

Pencil hardness testing was carried out in conformance to JIS-K5600 (with a load of 500 g, however), in which the function film surface was scratched by a pencil lead portion, and it was determined whether a concave portion occurred in a test portion. Application of the 500 g load makes a sufficiently severer condition than in such a case where the function film surface is inadvertently scratched by a finger nail. Existence or occurrence of a scratch is determined by subjective evaluation as to whether distortion occurs on a reflected image of indoor lighting equipment, such as a straight fluorescent tube, in an environment in which the illuminance is in the range of $100[1\times]$ to $800[1\times]$. Observation was carried out under conditions where the distance between the test portion and the straight fluorescent tube is 1 to 2 m, an angle $\theta$ shown in FIG. 9(b) is in the range of 0 to 90°, and an angle $\phi$ is in the range of 10 to 90°. As long as the pencil hardness is HB or higher, the scratch resistance of the function film surface causes no problems during practical usage.

A concave portion occurring on the function film surface is not recognized as a scratch if the depth thereof is about 3 $\mu$m or smaller; however, the depth is more preferably 1 $\mu$m or smaller. More specifically, a predetermined load (500 g, for example; and using the scale of HB in pencil hardness testing conforming to JIS-5600) is applied onto the function film surface. If, after this state is maintained for a predetermined period of time (60 minutes, for example), the depth of a concave portion is 3 $\mu$m or smaller, more specifically, 1 $\mu$m or smaller, then the concave portion is not recognized as a scratch. Further, scratch recognizability of a scratch is dependant on visual transmittance of the function film, such that conspicuity of the scratch increases as the transmittance elevates.

(Example 1)

Scratch resistance on the side of the display surface of a display panel module was tested and investigated by pencil hardness testing. In the display panel module, a function film including a base film 311 of 188 $\mu$m thickness and a base film 321 of 125 $\mu$m thickness is adhered onto the surface via an adhesive layer 3B of 100 $\mu$m thickness in the manner described above. According to the test results, no scratch occurred even at the hardness of HB.

(Example 2)

In the case that the thickness of the base film 311 is 188 $\mu$m, the thickness of the base film 321 is 125 $\mu$m, and the thickness of the adhesive layer 3B is 250 $\mu$m, no scratch occurred even at the hardness of HB.

(Example 3)

In the case that the thickness of the base film 311 is 250 $\mu$m, the thickness of the base film 321 is 125 $\mu$m, and the thickness of the adhesive layer 3B is 500 $\mu$m, no scratch occurred even at the hardness of HB.

(Comparative Example 1)

In the case that the thickness of the base film 311 is 100 $\mu$m, the thickness of the base film 321 is 125 $\mu$m, and the thickness of the adhesive layer 3B is 500 $\mu$m, a scratch occurred even at the hardness of 6B.

(Comparative Example 2)

In the case that the thickness of the base film 311 is 100 $\mu$m, the thickness of the base film 321 is 125 $\mu$m, and the thickness of the adhesive layer 3B is 150 $\mu$m, a scratch occurred even at the hardness of 6B.

(Comparative Example 3)

In the case that the thickness of the base film 311 is 100 $\mu$m, the thickness of the base film 321 is 125 $\mu$m, and the thickness of the adhesive layer 3B is 100 $\mu$m, no scratch occurred at a hardness lower than 2B, but a scratch occurred at the hardness of B. That is, in the case that the thickness of the thickest transparent resin film in the function film is 125 $\mu$m, and the thickness of the adhesive layer is 100 $\mu$m, the scratch resistance is deficient because of a slight hardness deficiency.

(Comparative Example 4)

In the case that the thickness of the base film 311 is 188 $\mu$m, the thickness of the base film 321 is 125 $\mu$m, and the thickness of the adhesive layer 3B is 500 $\mu$m, a scratch occurred even at the hardness of 6B.

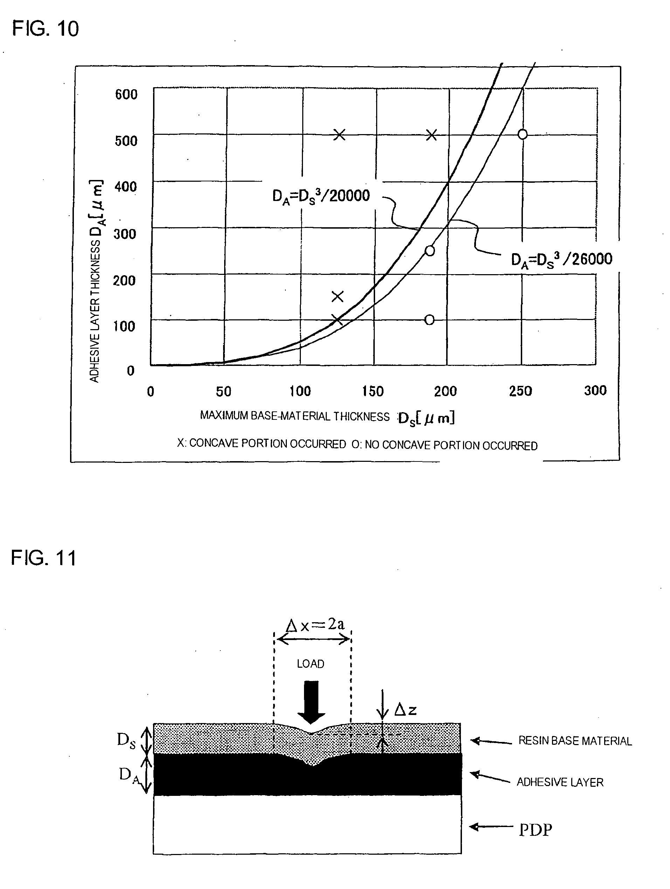

Examples 1 to 3 and Comparative Examples 1 to 4 are plotted in a graph of FIG. 10. In FIG. 10, the horizontal axis represents a maximum substrate (base material) thickness $D_S$, and the vertical axis represents a thickness $D_A$ of the adhesive layer. More specifically, in the experiments (tests), the sufficient hardness is not obtainable in the respective sample (Comparative Example 1, 2, 3), in which the thickness $D_S$ of the thickest transparent resin substrate of the function film is altered to 125 $\mu$m, and the thickness of the adhesive layer $D_A$ is altered to 500 $\mu$m, 150 $\mu$m, 100 $\mu$m. In the respective samples (Comparative Example 4, Example 2, 1), in which the thickness $D_S$ is 188 $\mu$m and the thickness $D_A$ of the adhesive layer is altered to 500 $\mu$m, 250 $\mu$m, 188 $\mu$m, the sufficient hardness is obtainable with the adhesive layer thickness $D_A$ of 250 $\mu$m, 188 $\mu$m. In the sample (Example 3) in which the thickness $D_S$ is 250 $\mu$m, the sufficient hardness is obtainable even with the adhesive layer thickness $D_A$ of 500 $\mu$m. Thus, it is obvious that, in the case of the thickness $D_S$ of 250 $\mu$m, the sufficient hardness is obtainable even with the adhesive layer thickness $D_A$ reduced to be smaller than 500 $\mu$m.

In FIG. 10, the occurrence of the concave scratch (without sufficient hardness) is shown by "x," and non-occurrence of the concave scratch (with sufficient hardness) is shown by "o." Accordingly, detection of the boundary between x and o makes it possible to obtain a thickness (scratch resistance) necessary for the thickest substrate of the function film, which is minimally necessary, for the thickness of the adhesive layer selected in terms of the foreign matter resistance.

From the results described above, it can be said that when the thickness $D_A$ (unit: $\mu$m)of the adhesive layer 3B and the thickness $D_S$ (unit: $\mu$m) of the thickest integral transparent resin substrate in the function film satisfy the following equation, the scratch resistance of the function film causes no problems in practical usage.

$$DS^3/D_A \geq 20000 \qquad \text{(Equation 1)}$$

In the present embodiment, while the function film includes two base films, the equation shown above is satisfied through the relation between the thickest integral transparent base material and the adhesive layer in the function film. More specifically, the equation is indicative that it can be approximated that the hardness of the function film is determined by the hardness of the thickest one of the transparent base materials included therein. General reasons therefor will be described herebelow.

FIG. 11 is a schematic view of a state where a load is applied to the function film of the display panel module. The PET substrate on the elastomeric adhesive layer locally forms a concave potion. When the ratio of a concave portion depth ($\Delta z$) to a width ($\Delta x$) of a concave portion area exceeds a threshold value (K), plastic deformation occurs, and a concave scratch occurs. As such, a condition not causing the concave scratch is represented by Equation 2 shown below.

$$\Delta z/\Delta x \leq K \qquad \text{(Equation 2)}$$

It is now assumed that bending is caused by applying a point load to the elemental PET substrate. In this case, according to a formula for bending a plane, the deformation amount $\Delta z$ of the PET substrate is proportional to $1/D_S^3$ and also to the area size of the deformed area, that is, the square of a radius a of the concave portion (as shown in Equation 3).

$$\Delta z \propto a^2/D_S^3 \qquad \text{(Equation 3)}$$

Further, it is assumed that $\Delta_X$ representing the deformed area is approximately proportional to the hardness (spring constant). In this case, Equation 4 shown below is satisfied in accordance with the Hook's law, wherein the load is represented by F and the elastic coefficient is represented by $E_A$.

$$\Delta_X \propto F/\Delta_Z = E_A{}^*a^2/D_A \qquad \text{(Equation 4)}$$

Thus, it can be known from Equations 2 to 4 that $\Delta_Z/\Delta_X$ has a proportional relation represented by Equation 5 shown below.

$$\Delta_Z / \Delta_X \propto D_A/D_S{}^3 \leq K' \quad \text{(Equation 5)}$$

Accordingly, the condition for not causing the concave scratch is that the right side of Equation 5 is smaller than the threshold value K'.

According to FIG. 10 showing the summary of the results of the examples and comparative examples, in Comparative Example 3 ($D_S$ = 125 $\mu$m; $D_A$ = 100 $\mu$m) the scratch is caused by the slightly insufficient hardness at 2B. As such, the result corresponds to the case of "non-occurrence of the concave scratch" if the adhesive layer thickness $D_A$ is slightly smaller than in the case of Comparative Example 3. Consequently, such a virtual point is supposed to be the boundary of Equation 5.

Then, when the threshold value K' of Equation 5 is calculated from the sample point, (K' = 1/20000) is derived. Accordingly, a conclusion that no scratch is caused when Equation 1 is satisfied can be derived in the manner that two sides of Equation 5 are made to be reciprocal and the sign of inequality is reversed.

Alternatively, in order to increase the resistance against the concave scratch, it is preferable that the configuration is formed equivalent to or better than that of Example 2, the threshold value K' of Equation 5 (K' = 1/26000) is derived, and Equation 6 shown below is satisfied.

$$D_S{}^3/D_A \geq 26000 \qquad \text{(Equation 6)}$$

As described above, the thickness $D_S$ of the PET film substrate that satisfies Equation 1 or at least Equation 6 is selected for the thickness $D_A$ of the adhesive layer selected to satisfy the conditions for the foreign matter resistance, whereby the corrosion resistance can be concurrently obtained. According to standardized products, the thicknesses of PET films are discrete thicknesses, such as 100, 125, and 188 $\mu$m. As such, it is necessary to select a standardized product having a thickness greater than and equal to the thickness $D_S$ that satisfies Equation 1 or at least Equation 6.

With the above-described conditions, even in the case that the function film is configured using a transparent resin substrate of a different material, such as PC (polycarbonate), a conclusion equivalent to the above was obtainable. The following describes a comparative example and examples in the cases where a PC film was used as the base film 311.

(Comparative Example 5)

In the case that, in a function film 3A without the electromagnetic wave shield film layer 320, a PC film of a thickness of 100 $\mu$m is used for the base film 311, and the thickness of the adhesive layer 3B is 1000 $\mu$m, a scratch occurred even at the hardness of 6B.

(Example 4)

In the case that, in a function film 3A without the electromagnetic wave shield film layer 320, a PC film of a thickness of 300 $\mu$m is used for the base film 311, and the thickness of the adhesive layer 3B is 1000 $\mu$m, no scratch occurred even at the hardness of HB.

(Example 5)

In the case that, in a function film 3A without the electromagnetic wave shield film layer 320, a PC film of a thickness of 1000 $\mu$m is used for the base film 311, and the thickness of the adhesive layer 3B is 1000 $\mu$m, no scratch occurred even at the hardness of HB.

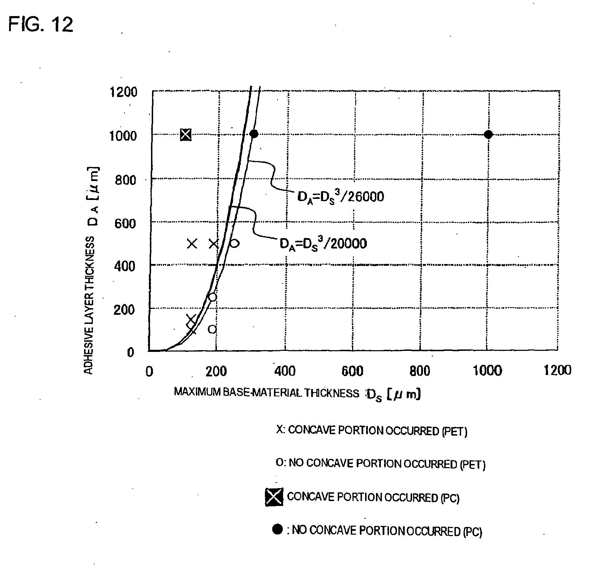

FIG. 12 is a graph diagram of the same type as FIG. 10, on which Comparative Example 5 and Examples 4 and 5 are plotted. FIG. 12 shows also Examples 1 to 3 and Comparative Examples 1 to 4 shown in FIG. 10. As shown in FIG. 12, it was verified that, even in the cases where the base film 311 is configured using the PC film, Equation 1 or at least Equation 6 are satisfied. What can be surmised from the results are that the difference between the hardnesses of the PET film and the PC film is sufficiently small in comparison to the difference between the pencil hardnesses (such as the difference between H and HB), and the result of the pencil hardness testing is hardly influenced by the difference between the materials.

The present inventor surmises that not only such PET and PC films, but also transparent resin films of other materials, such as PEN (polyethylene naphthalate), TAC (triacetyl cellulose), and acryl, would satisfy similar conditions to those described above.

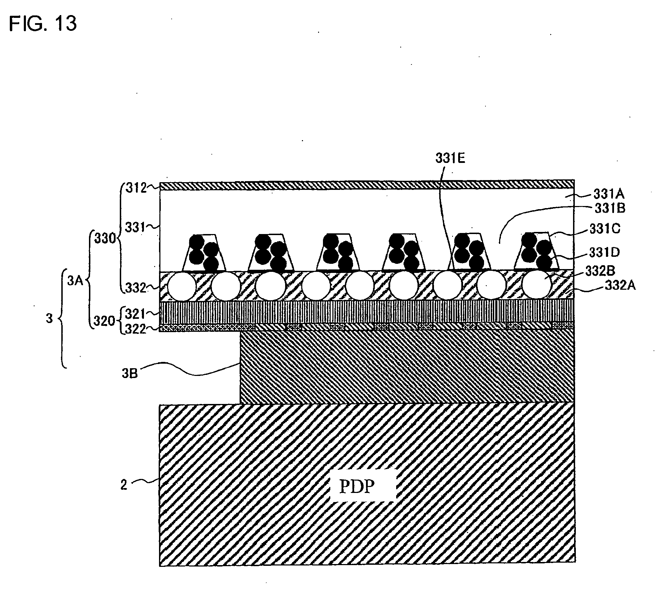

FIG. 13 is a cross sectional view of a modified example or embodiment of the display panel module in accordance with the present embodiment. As compared to FIG. 4, the modified embodiment is different in the use of, as a film having the antireflective film 312, a contrast improvement film including a BS layer 331 (shield function layer) and a diffusion layer 332. The contrast improvement film is described in Patent Publication 2 referenced above.

In the contrast improvement film, the BS layer 331 is a shield function layer for absorbing image light and outer light, and includes a base portion 331A configured from, for example, a PET film of a predetermined thickness, a light transmission portion 331 B, light absorption particles 331 D mixed into transparent resin in a wedge-shaped groove 331C, and a black stripe 331 E. The diffusion layer 332 is a mat processing layer formed from a fine irregular shape having light diffusion effects. The diffusion layer 332 is formed in the manner that a material produced by adding 10 weight % silica beads 332B to a UV (ultraviolet light) curable resin 332A is coated and cured.

With the use of the contrast improvement film in place of the base film 311 shown in FIG. 4, while a somewhat increased cost is involved, the bright-room contrast and the vertical viewing angle (in the tradeoff relation) become adjustable through appropriate designing the thickness of the layer 331 working as the BS layer. For exhibition of contrast improvement effects, the thickness of the layer 331 (BS layer) has to be 100 $\mu$m or larger, and is preferably 300 $\mu$m or smaller when handling characteristics in assembly of the function film is taken into consideration. The thickness of the contrast improvement film can be freely designed within the above-described thickness range, and the Equation 1 or 6 can easily be satisfied. In this respect, no restrictions occur for designing the thickness of the adhesive layer 3B. In the above, the contrast improvement film is disposed closer to the side of viewing surface than to the EMI shield film layer 320, and an AR coat 312 is applied, such that even higher antireflective capability can be secured. Further, the resin substrate for forming the antireflective layer is unnecessary, so that the costs can be reduced.

In the case of the function film to be directly adhered onto the display panel, the diffusion layer 332 is not in contact with the air layer and is not able to exhibit the light diffusion function so much, so that it is not necessarily be provided.

While description has been made above with reference to the exemplified plasma display panel, the device constituting the screen is not limited to the plasma display panel. The embodiments of the present invention can be adapted to apparatuses in which the screen is formed from any one of other display panels including an EL (electro luminescent) display, FED (field emission display), and liquid crystal display.

These embodiments of the present invention promotes cost reduction of a lightweight display device in which the function film is directly adhered onto the display panel, and contributes to popularization of thin display devices.

**Claims**

1. A display panel module comprising:

   a display panel; and
   a function film adhered onto the front surface of the display panel;

   wherein the function film includes at least one transparent substrate and an adhesive layer which adheres the display panel and the function film together; and
   wherein a thickness of the at least one transparent substrate and a thickness of the adhesive layer have a predetermined relation so as to substantially prevent occurrence of a concave portion with a depth greater than 3um on the front surface of the function film.

2. A display panel module according to claim 1, wherein a thickness $D_S$ of the at least one transparent substrate and a thickness $D_A$ of the adhesive layer satisfy a relation represented by an equation: $D_S{}^3/ DA >= 20000$.

3. A display panel module according to claim 2, wherein the function film includes only one transparent substrate with the thickness $D_S$.

4. A display panel module according to claim 2, wherein a plurality of transparent substrates are provided, and a thickest one of the plurality of transparent substrates has a thickness $D_S$.

5. A display panel module according to claim 2, wherein the thickness of the adhesive layer is at least 50um.

6. A display panel module according to claim 1, wherein the thickness $D_S$ of the transparent substrate and the thickness $D_A$ of the adhesive layer satisfy a relation represented by an equation: $D_S^3/D_A >= 26000$.

7. A display panel module according to claim 5, wherein the thickness of the adhesive layer is at least 50um.

8. A display panel module according to claim 1, wherein the at least one transparent substrate substantially has an impact load resistance, and the adhesive layer substantially has a foreign matter resistance.

9. A display panel module according to claim 1, wherein the occurrence of the concave portion with the depth greater than 3um is prevented even when a predetermined impact load is temporarily applied onto the surface of the function film.

10. A display panel module according to claim 9, wherein the depth of the concave portion 60 minutes after removal of the temporarily applied impact load is not greater than 3um.

11. A display panel module according to claim 9, wherein the depth of the concave portion 60 minutes after removal of the temporarily applied impact load is not greater than 1 um.

12. A display panel module according to claim 9, wherein the predetermined load is a load of 500 g with a hardness of HB in accordance with pencil hardness testing conforming to JIS-K5600.

13. A display panel module according to claim 1, wherein an antireflective layer is formed on the at least one transparent substrate.

14. A display panel module according to claim 13, wherein the at least one transparent substrate is a transparent resin substrate.

15. A display panel module according to claim 14, wherein the at least one transparent resin substrate is a polyethylene terephthalate film.

16. A display panel module according to claim 1, wherein the plurality of transparent substrates includes a first transparent substrate and a second transparent, the first transparent substrate being arranged between an antireflective layer and the second substrate, the second transparent substrate being arranged between the first transparent substrate and an electromagnetic shield layer and an electromagnetic shield layer is arranged between the second transparent substrate and the adhesive layer, and
wherein a thickness $D_{S1}$ of the first transparent substrate satisfies the equation: $D_{S1}^3/D_A >= 20000$.

17. A display panel module comprising:

   a display panel; and
   a function film adhered onto the front surface of the display panel;

   wherein the function film includes at least one transparent substrate and an adhesive layer with a thickness $D_A$ greater than 50 um, which adheres the display panel and the function film together; and
   wherein a thickness $D_S$ of the at least one transparent substrate and the thickness $D_A$ of the adhesive layer satisfy a relation represented by an equation: $D_S^3/D_A >= 20000$.

18. A display panel module according to claim 17, wherein the thickness $D_S$ of the at least one transparent substrate and the thickness $D_A$ of the adhesive layer satisfy a relation represented by an equation: $D_S^3/D_A >= 26000$.

19. A display panel module according to claim 17, wherein the thickness of the at least one transparent substrate and the thickness of the adhesive layer have a predetermined relation so as to substantially prevent occurrence of a concave portion with a depth greater than 3 um on the front surface of the function film.

**20.** A manufacturing method of a display panel module including a display panel and a function film to be adhered onto the display panel via an adhesive layer, comprising the steps of:

testing a display panel; and
adhering the function film via the adhesive layer to the side of a front surface of the display panel, the function film including at least one transparent substrate and the adhesive layer,

wherein the adhesive layer is provided with a thickness $D_A$ greater than 50 $\mu$m, and
wherein the at least one transparent substrate is provided with the thickness $D_S$ of the at least one transparent substrate and a thickness $D_S$ of the at least one transparent substrate and the thickness $D_A$ of the adhesive layer satisfy a relation represented by an equation: $D_S^3/ D_A >= 20000$.

FIG. 1

FIG. 2

FIG. 3

FIG. 4

FIG. 5

## FIG. 6

FIG. 7

| #1 | MANUFACTURE PLASMA DISPLAY PANEL |
| #2 | PERFORM AGING |
| #3 | MOUNT DRIVE CIRCUIT BOARD |
| #4 | PERFORM LIGHTING TEST |
| #5 | CLEAN MOUNTING SURFACE |
| #6 | ADHERE FUNCTION FILM |

FIG. 8

FIG. 9

TEST PORTION (SCRATCH)

FILTER

TEST PIECE

REGULAR-REFLECTION IMAGE OF
FLUORESCENT TUBE

GLASS

(a)

FLUORESCENT TUBE (STRAIGHT TYPE)

1~2[m]

OBSERVATION SPOT

FILTER

GLASS

φ

(b)

FIG. 10

X: CONCAVE PORTION OCCURRED O: NO CONCAVE PORTION OCCURRED

FIG. 11

FIG. 12

X: CONCAVE PORTION OCCURRED (PET)

O: NO CONCAVE PORTION OCCURRED (PET)

CONCAVE PORTION OCCURRED (PC)

● : NO CONCAVE PORTION OCCURRED (PC)

FIG. 13

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004206076 A
- JP 2006201557 A

- JP 2006201747 A